# EUROPÄISCHE PATENTSCHRIFT

(11) **EP 2 239 070 B1**
(45) Veröffentlichungstag und Bekanntmachung des Hinweises auf die Patenterteilung: **03.06.2015**
(21) Anmeldenummer: 10405071.1
(22) Anmeldetag: 01.04.2010
(51) Int. Cl.: B22D 17/14, B22D 17/22, B22C 9/06, B29C 45/34

(54) **Giessvorrichtung**
Casting device
Dispositif de coulée

(30) Priorität: 06.04.2009 CH 5562009
(43) Veröffentlichungstag der Anmeldung: 13.10.2010
(73) Patentinhaber: Fondarex S.A., CH-1806 St. Légier (CH)
(72) Erfinder: Baumgartner, Konrad, 1807 Blonay / VD (CH)
(74) Vertreter: Rottmann, Maximilian

(56) Entgegenhaltungen:
- EP-A2- 0 790 090
- EP-A2- 1 358 957
- JP-A- 62 278 012
- JP-A- 2005 211 918

## Beschreibung

Die Erfindung betrifft eine Giessvorrichtung nach dem Oberbegriff des Anspruchs 1 sowie ein Verfahren zum Entlüften von Giessvorrichtungen gemäss dem Oberbegriff des Anspruchs 10.

Sowohl beim Druck- wie auch beim Spritzgiessen müssen Lufteinschlüsse im fertigen Teil verhindert werden, um eine hohe Qualität der gefertigten Teile sicherzustellen. Um dies zu erreichen muss darauf geachtet werden, dass nicht nur die in den Hohlräumen der Giessform vorhandene Luft entweichen kann, sondern auch die aus der flüssigen Giessmasse austretenden Gase.

Damit bei einer Giessvorrichtung die im Formhohlraum der Giessform eingeschlossenen Gase entweichen können, sind aus dem Stand der Technik Entlüftungsanordnungen für Giessvorrichtungen bekannt, die mit sogenannten Kühlblöcken versehen sind. Dabei soll der jeweilige, am Ende eines mit dem Formhohlraum verbundenen Entlüftungskanals angeordnete Kühlblock ermöglichen, dass die Gase entweichen können. Sobald das flüssige Giessmaterial in den Kühlblock eindringt wird es abgekühlt und zum Erstarren gebracht. Eine andere Form von Entlüftungsanordnungen ist mit Ventilvorrichtungen versehen, welche im Entlüftungskanal angeordnet werden. Grundsätzlich sind zwei unterschiedliche Arten von Ventilvorrichtungen für bekannt, wobei jeweils beide Arten ein Entlüftungsventil mit einem hin- und herbeweglichen Verschlussorgan zum Verschliessen des Entlüftungskanals besitzen. Während bei der ersten Art das Verschlussorgan fremdbetätigt wird, steht das Verschlussorgan bei der zweiten Art mit einem Kraftaufnehmer in Wirkverbindung, der direkt von dem von der Kavität in den Entlüftungskanal vordringenden Giessmaterial, unter Ausnutzung von dessen kinetischer Energie, betätigt wird.

Aus der EP 0 612 573 ist eine Ventileinrichtung zum Entlüften von Druckgiessformen bekannt, welche mit einem Entlüftungskanal, einem im Entlüftungskanal angeordneten Entlüftungsventil und einer Betätigungsvorrichtung zum Schliessen des Entlüftungsventils versehen ist. Die Betätigungsvorrichtung weist einen Kraftaufnehmer auf, welcher durch das aus der Kavität in den Entlüftungskanal vordringende Giessmaterial beaufschlagbar ist und mit dem beweglichen Verschlussteil des Entlüftungsventils in mechanischer Wirkverbindung steht. Dabei ist der Kraftaufnehmer als Stossorgan ausgebildet, dessen Arbeitshub auf einen Bruchteil des vom beweglichen Verschlussteils des Entlüftungsventils zurückzulegenden Schliessweges begrenzt ist. Im weiteren ist der Verschlussteil des Entlüftungsventils über den Arbeitshub des Kraftaufnehmers hinaus im Freilauf bewegbar und die Betätigungsvorrichtung weist ein Kraftübertragungsorgan für die Übertragung des Stossimpulses vom Kraftaufnehmer auf den beweglichen Verschlussteil des Entlüftungsventils auf.

Um die Produktivität zu erhöhen sind Giessvorrichtungen entwickelt worden, die mit einer Giesskammer versehen sind, deren Auslass mittels eines Verschlussorgans zumindest teilweise verschliessbar ist. Ein Vorteil derartiger Giessvorrichtungen besteht darin, dass damit die Zykluszeiten verkürzt werden können, da das Befüllen der Giesskammer schon vor dem Schliessen der Giessform, oder simultan mit dem Schliessen der Giessform, erfolgen kann. Mit dem Verkürzen der Zykluszeit steigt jedoch auch die Gefahr von Lufteinschlüssen.

Aus der DE 199 14 830 A1 ist eine mit einem Verschlussorgan versehene Giessvorrichtung bekannt. Diese umfasst eine feste erste Formhälfte und eine bewegliche zweite Formhälfte. Die beiden Formhälften begrenzen zwischen sich den mit Metallschmelze zu füllenden Formhohlraum. Die feste Formhälfte ist mit einer Giesskammer und einem darin geführten Giesskolben versehen. Die Giesskammer weist einlassseitig eine Dosieröffnung auf. Der Auslass der Giesskammer ist über einen Angiesskanal mit dem Formhohlraum verbunden. Im Bereich des Auslasses der Giesskammer ist abgeschrägtes Ventil angeordnet, welches über eine Kolbenstange mit einer Hydraulik verbunden ist. Mittels dieses Ventils ist der Auslass der Giesskammer verschliessbar. Vom Formhohlraum führt ein Entlüftungskanal aus der Form, wobei letzterer mit einer Einrichtung zur Unterdruckerzeugung sowie einem Vakuumabsperrventil verbunden ist. Beim Giessvorgang wird zuerst der Formhohlraum und der Angiesskanal via Absperrventil evakuiert. Danach wird die Metallschmelze in die Giesskammer eingefüllt. Nach erfolgter Dosierung des Metalls fahrt der Giesskolben über die Dosieröffnung soweit in die Giesskammer ein, bis diese mit der Metallschmelze gefüllt ist. Erst wenn die Giesskammer zu 100% mit Metallschmelze gefüllt ist, wird das Ventil geöffnet, so dass das flüssige Metall über den Angiesskanal in den Formhohlraum eindringen kann.

Aus der EP 0 790 090 A2 ist eine Vakuum-Druckgiessmaschine bekannt, welche mit einer Giessform, versehen ist. Die Giessform besteht aus einer festen Formhälfte und einer beweglichen Formhälfte. Zwischen den beiden Formhälften befindet sich der Formhohlraum. Neben einer mit einem Giesskolben versehenen Giesskammer ist an der festen Formhälfte eine Dichtungsanordnung angeordnet, der den Formhohlraum umgibt. Über ein in die Giesskammer mündendes Ansaugrohr kann die Metallschmelze aus einem Warmhalteofen angesaugt werden. Von dem Formhohlraum führt dazu ein Absaugkanal vertikal nach oben. Am oberen Ende dieses Absaugkanals ist ein Vakuumventil angeordnet, welches über eine Vakuumanschlussleitung mit einer Evakuiereinrichtung verbunden ist. Während des Schliessens der beiden Formhälften wird der Giesskolben in eine Mittelstellung gefahren, so dass der Formhohlraum gegenüber dem Warmhalteofen verschlossen ist und kein Gas aus dem Formhohlraums in die Schmelze zurückgedrückt werden kann. Der Auslass der Giesskammer mündet über eine Ausbuchtung direkt in den Formhohlraums.

Ein wesentlicher Nachteil dieser Druckgiessform besteht darin, dass die beiden Formhälften vor dem Füllen des Giesskammer zwingend ganz verschlossen werden müssen, da ansonsten die aus der Giesskammer austretende Metallschmelze die Dichtungsanordnung beschädigen würde.

Aus der JP 62 278 012 geht eine Vakuum-Giessform mit zwei vertikal übereinander angeordnete Formhälften hervor Zwischen den beiden Formhälften befindet sich die Kavität, welche über ein Füllrohr von oben befüllbar ist. Die obere Formhälfte ist mit einem die Kavität umgebenden Dichtring sowie einem Absaugkanal versehen. Der Absaugkanal mündet radial innerhalb des Dichtorgans in die Trennfläche zwischen den beiden Formhälften. Seitlich der Kavität ist ein Kanal angeordnet, der radial in die Trennfläche mündet. Bei dieser Giessform handelt es sich um eine Niederdruck-Giessform, welche weder eine Giesskammer noch einen Giesskolben aufweist. Zudem müssen bei dieser Giessform vor dem Ansaugen des Giessmaterials die beiden Formhälften komplett zusammengefahren werden, da ansonsten die einströmende Metallschmelze die Dichtung beschädigen würde.

Die JP 2005 211 918 beschreibt eine Giessform, die mit einer festen Formhälfte einer bewegliche Formhälfte sowie einem beweglichen Kern versehen ist. An der festen Formhälfte ist ein Dichtring angeordnet, der den Formhohlraum umgibt. Der Formhohlraum kann über einen Kanal befüllt werden. Die Giessform weist weder eine Giesskammer, einen Giesskolben noch einen Entlüftungskanal auf.

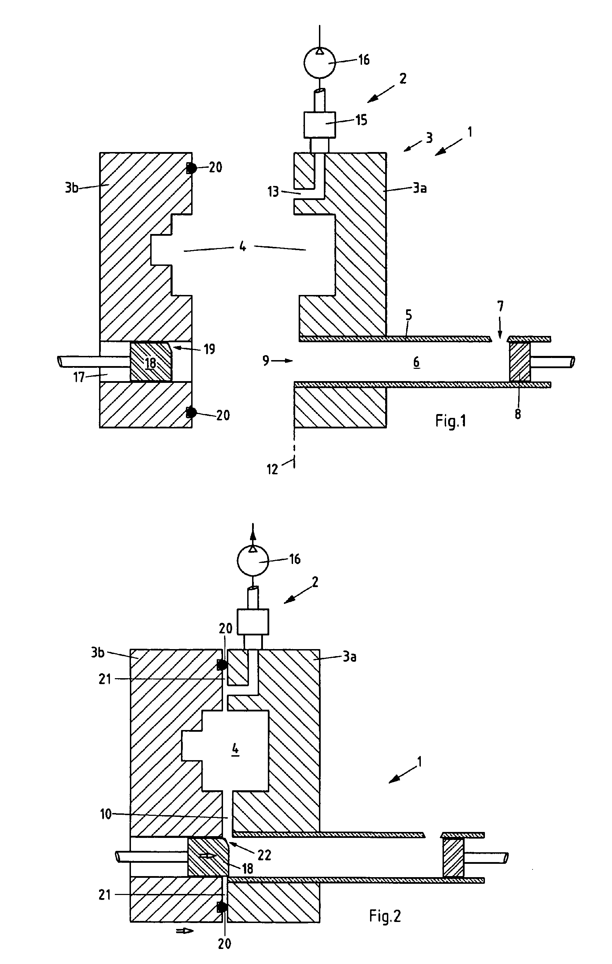

Die EP 1 358 957 A2 beschreibt eine Giessvorrichtung, mit einem unteren Formteil und einem oberen Formteil. Wenn sich der obere Formteil dem unteren Formteil annähert, ist ein Kavität zwischen den beiden Teilen gebildet. Der untere Formteil weist eine Speicherkammer auf, welche mit der Kavität in Verbindung steht. Ein erster Dichtungsring ist in einer kreisförmigen Nut eines unteren Form Halteteils untergebracht. Ein erster Druckminderungsdurchgang ist bei einer vorbestimmten Position des oberen Form-Halteteils ausgebildet. Wenn das untere Form-halterteil und das obere Form-Halteteil zueinander geschlossen sind, wie es in der Fig. 1 gezeigt ist, fungiert der Dichtungsring als Dichtungslement. In dem in Fig. 1 gezeigten Zustand (also in geschlossenem Zustand) wird die Druckminderungspumpe betätigt, so dass sie Luft in dem Hohlraum über den Druckminderungsdurchgang nach aussen entladen wird.

Die Aufgabe der Erfindung besteht nun darin, eine Giessvorrichtung gemäss dem Oberbegriff des Anspruchs 1 derart weiterzubilden, dass sie einfach aufgebaut und unempfindlich gegen Verschmutzung ist, wobei die Giessvorrichtung optimierte Zykluszeiten bei gleichzeitig hoher Qualität des fertigen Teils sicherstellen soll, indem insbesondere Lufteinschlüsse weitestgehend vermieden werden.

Diese Aufgabe wird durch die im Kennzeichen des Anspruchs 1 angeführten Merkmale gelöst.

Indem der Auslass der Giesskammer mittels eines Verschlussorgans zumindest teilweise verschliessbar ist und an der einen Formhälfte ein zumindest den Formhohlraum umgebendes Dichtorgan angeordnet ist, welches beim Zusammenführen der beiden Formhälften dichtend an der anderen Formhälfte zur Anlage kommt, wird die grundsätzliche Voraussetzung geschaffen, damit schon vor dem vollständigen Zusammenfahren der beiden Formhälften, Gase aus dem Formhohlraum und/oder der Giesskammer abgesaugt werden können. Sobald nämlich das an der einen Formhälfte angeordnete Dichtorgan dichtend an der anderen Formhälfte zur Anlage kommt, können über den Entlüftungskanal Gase aus dem Innern der Giessform abgesaugt werden. Über den allfällig zwischen den beiden Formhälften noch bestehenden Spalt können Gase besonders schnell und effizient aus dem Formhohlraum und/oder der Giesskammer abgesaugt werden. Daher eignet sich diese Ausführungsform bevorzugt zum schnellen Evakuieren der in der Giessform vorhandenen Hohlräume. Sofern der Entlüftungskanal derart in die Trennfläche der einen Formhälfte mündet, dass er beim Schliessen der Giessform durch die andere Formhälfte verschliessbar ist, kann auf zusätzliche Mittel zum Verschliessen des Entlüftungskanals verzichtet werden, da der Entlüftungskanal durch die Giessform selber, namentlich die eine Formhälfte, verschliessbar ist. Sofern der Entlüftungskanal zumindest teilweise in die Trennfläche eingelassen ist, muss zumindest der in die Trennfläche eingelassene Teil oder Abschnitt des Entlüftungskanals innerhalb des Dichtorgans verlaufen, damit schon vor dem vollständigen Zusammenfahren der beiden Formhälften Gase aus dem Formhohlraum und/oder der Giesskammer abgesaugt werden können.

Bevorzugte Weiterbildungen der Giessvorrichtung sind in den abhängigen Ansprüchen 2 bis 9 umschrieben.

Eine weitere Aufgabe der Erfindung besteht darin, ein Verfahren zum Entlüften von Giessvorrichtungen gemäss dem Oberbegriff des Anspruchs 10 vorzuschlagen, mit welchem sich trotz verkürzter Zykluszeit die Qualität der Giessteile optimieren lässt, indem Lufteinschlüsse zuverlässig verhindert werden.

Diese Aufgabe wird durch die im Kennzeichen des Anspruchs 10 angeführten Verfahrensschritte gelöst.

Bevorzugte Weiterbildungen des Verfahrens sind in den abhängigen Ansprüchen 11 und 12 definiert.

Nachfolgend wird ein Ausführungsbeispiel der Ventileinrichtung anhand von Zeichnungen näher erläutert. In diesen Zeichnungen zeigt:
- Fig. 1: einen Querschnitt durch eine schematisch dargestellte Giessvorrichtung;
- Fig. 2: die Giessvorrichtung gemäss Fig. 1 während einer ersten Entlüftungsphase;
- Fig. 3: die Giessvorrichtung gemäss Fig. 1 während einer zweiten Entlüftungsphase;
- Fig. 4: die Giessvorrichtung gemäss Fig. 1 während einer dritten Entlüftungsphase;
- Fig. 5: einen Querschnitt durch ein erstes alternatives Ausführungsbeispiel einer Giessvorrichtung, und
- Fig. 6: einen Querschnitt durch ein zweites alternatives Ausführungsbeispiel einer Giessvorrichtung.

Anhand der Figur 1, welche einen Querschnitt durch eine schematisch dargestellte Giessvorrichtung 1 zusammen mit einer Entlüftungseinrichtung 2 zeigt, wird der grundsätzliche Aufbau der Giessvorrichtung 1 näher erläutert. Die Giessvorrichtung 1 umfasst eine aus zwei Hälften 3a, 3b bestehende Giessform 3, welche in ihrem Innern einen Formhohlraum 4, auch Kavität genannt, für das zu giessende Teil begrenzt. Die beiden Formhälften 3a, 3b sind im geöffneten Ausgangszustand gezeigt. Die rechte Formhälfte 3a ist ortsfest angeordnet und mit einer Einfüllbüchse 5 versehen, deren Innenraum die sogenannte Giesskammer 6 bildet. Die Einfüllbüchse 5 weist auf ihrer Oberseite eine Einfüllöffnung 7 für das Giessmaterial auf. In der Giesskammer 6 ist ein Giesskolben 8 verschiebbar aufgenommen. Die Giesskammer 6 ist mit einem Auslass 9 für das Giessmaterial versehen, der in den Bereich der Trennfläche 12 der festen Formhälfte 2a mündet.

Die ortsfeste Formhälfte 3a ist mit einem Entlüftungskanal 13 versehen, der oberhalb des Formhohlraums 4 unter einem rechten Winkel in die Trennfläche mündet. Der Entlüftungskanal 13 führt von der Trennfläche 12 ausgehend ins Innere der Form 3, wo er um 90° umgelenkt und nach oben aus der Formhälfte 3a herausgeführt wird. Auf der Oberseite der ortsfesten Formhälfte 3a ist am Ende des Entlüftungskanals 13 die Entlüftungseinrichtung 2 angeordnet, welche ein Filter 15 und eine Vakuumanlage 16 umfasst. Die Vakuumanlage 16 dient dem zwangsweisen Entlüften des Formhohlraums 4. An der linken Formhälfte 3b ist ein Dichtring 20 angeordnet, der radial ausserhalb des Formhohlraums 4 wie auch der Mündung des Entlüftungskanals 13 verläuft. Der Entlüftungskanal 13 mündet somit radial innerhalb des Dichtrings 20 in die Trennfläche 12. Die Funktion dieses Dichtrings 20 wird anschliessend im Zusammenhang mit der Entlüftungseinrichtung 2 noch näher erläutert. Obwohl der Entlüftungskanal 13 im vorliegenden Beispiel unter einem rechten Winkel in die Trennfläche 12 der festen Formhälfte 3a mündet, kann der Entlüftungskanal 13 grundsätzlich auch unter einem anderen Winkel, beispielsweise zwischen ca. 30 und 90°, in die Trennfläche 12 münden.

Die linke Formhälfte 3b ist zwischen einer ersten und zweiten Position verschiebbar angeordnet, wobei auf der Höhe der Giesskammer 6 eine zylindrische Kammer 17 in die Formhälfte 3b eingelassen ist. In der zylindrischen Kammer 17 ist ein Verschlussorgan in Form eines Verschlusskolbens 18 verschiebbar aufgenommen. Der Verschlusskolben 18 dient dem Verschliessen der Giesskammer 6. Um ein Entlüften der Giesskammer 6 zu begünstigen, kann der Verschlusskolben 18 im oberen Bereich mit einer Anschrägung 19 versehen sein. Alternativ zu dieser Anschrägung 19 kann auch ein nach oben wegführender Kanal, eine Aussparung, Öffnung oder dergleichen vorgesehen werden, um ein Entlüften der Giesskammer 6 zu ermöglichen, wenn der Verschlusskolben 18 diese auslassseitig verschliesst. An der verschiebbaren Formhälfte 3b ist zudem der Dichtring 20 angeordnet, der sich beim Verschliessen der Giessform 3 an der Stirnfläche der festen Formhälfte 3a anlegt, so dass die stirnseitige Mündung des Entlüftungskanals 13 wie auch der Formhohlraum 4 von dem Dichtring 20 radial umschlossen werden. Anstelle eines Verschlusskolbens 18 kann beispielsweise auch ein Schieber oder dergleichen vorgesehen werden, mittels welchem die Giesskammer 6 verschliessbar ist. Ein solcher Schieber wird anschliessend noch näher erläutert.

Die Funktionsweise der Vorrichtung stellt sich wie folgt dar:
Als erstes wird die bewegliche linke Formhälfte 3b in die erste Position bewegt, indem sie soweit nach rechts gegen die feste Formhälfte 3a gefahren wird, bis der Dichtring 20 an der Stirnfläche der festen Formhälfte 3a zur Anlage kommt. Wie aus der Fig. 2 ersichtlich ist, verbleibt in dieser ersten Position zwischen den Stirnflächen der beiden Formhälften 3a, 3b noch ein Spalt 21, zumal der Dichtring 20 noch nicht zusammengedrückt ist. Der Auslass der Giesskammer 6 ist nun über einen Füllkanal 10 mit dem Formhohlraum 4 verbunden. In diesem Zustand ist der Spalt 21 wie auch der Formhohlraum 4 und die Mündung des Entlüftungskanals 13 durch den Dichtring 20 nach aussen abgedichtet. Der Spalt 21 begünstigt jedoch das Entweichen bzw. Absaugen von sich in dem Formhohlraum 4 sowie der Giesskammer 6 befindlichen Gasen.

Nachdem die beiden Formhälften 3a, 3b bis auf den Spalt 21 zusammengefahren sind, wird der Verschlusskolben 18 in Richtung der festen Formhälfte 3a gefahren, so dass der Auslass 9 der Giesskammer 6 weitgehend verschlossen ist. Durch die Anschrägung auf der Oberseite des Verschlusskolbens 18 verbleibt jedoch noch ein Durchlass 22 am Auslass der Giesskammer 6, über welchen die Gase auch bei nach aussen abgeschlossener Giesskammer 6 entweichen können.

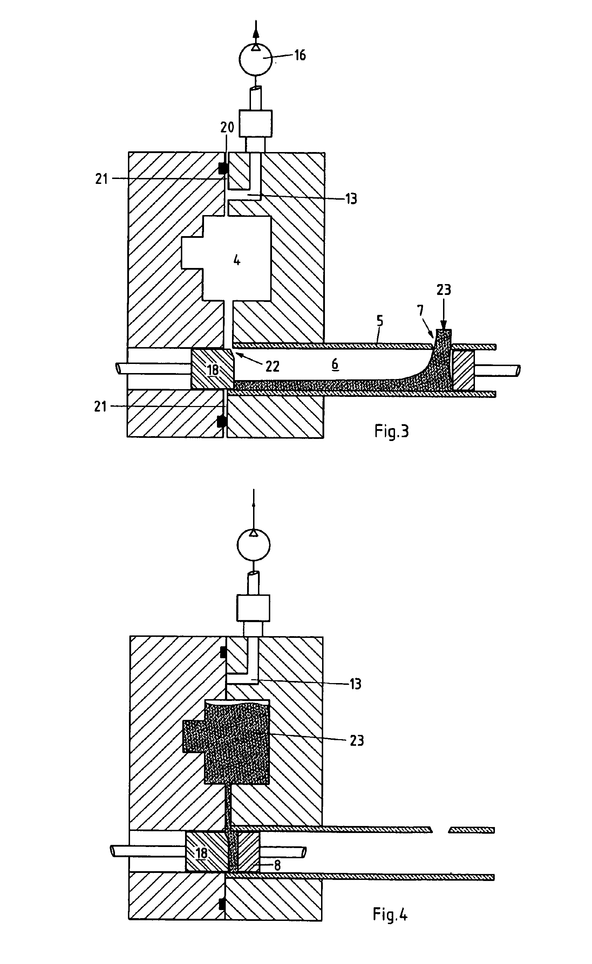

Sobald der Verschlusskolben 18 den Auslass 9 der Giesskammer 6 wie in der Fig. 3 dargestellt zumindest teilweise verschliesst, kann mit dem Einfüllen des Giessmaterials begonnen werden. Das Giessmaterial 23 wird über die Einfüllöffnung 7 der Einfüllbüchse 5 in die Giesskammer 6 eingefüllt, wo es auslassseitig durch den Verschlusskolben 18 aufgestaut und am Austreten aus der Giesskammer 6 gehindert wird. Über den Spalt 21 und den Entlüftungskanal 13 können mittels der Vakuumanlage 16 schon während dieser Phase Gase aus der Giesskammer 6 sowie dem Formhohlraum 4 abgesaugt werden. Dabei stellt der Dichtring 20 sicher, dass der Spalt 21 zwischen den beiden Formhälften 3a, 3b nach aussen abgedichtet ist. Spätestens nachdem die zum Füllen des Formhohlraums 4 benötigte Menge an Giessmaterial in die Giesskammer 6 eingefüllt ist, werden die beiden Formhälften 3a, 3b vollständig zusammengefahren, indem die bewegliche Formhälfte 3b in die zweite Position bewegt wird. In dieser zweiten Position ist der Dichtring 20 zusammengequetscht und der Spalt 21 zwischen den beiden Formhälften 3a, 3b aufgehoben. Zum Füllen des Formhohlraums 4 wird der Verschlusskolben 18 etwas zurückgezogen und der Giesskolben 8 nach links in Richtung der beweglichen Formhälfte 3b bewegt, so dass das Giessmaterial 23 aus der Giesskammer 6 in den Formhohlraum 4 gedrückt wird, wie dies in der Fig. 4 angedeutet ist.

Mit dem Schliessen der beiden Formhälften 3a, 3b und dem Aufheben des Spalts zwischen den beiden Formhälften 3a, 3b wird auch der Entlüftungskanal 13 verschlossen, da die Stirnfläche der beweglichen Formhälfte 3b die Mündung des Entlüftungskanals 13 verschliesst. Dadurch wird gleichzeitig auch sichergestellt, dass das Giessmaterial 23 nicht aus dem Formhohlraum 4 austreten kann. Diese Ausbildung hat somit den Vorteil, dass keine zusätzlichen oder beweglichen Elemente wie Ventile oder dergleichen zum Verschliessen des Entlüftungskanals, oder Kühlblöcke zum Auffangen und Stoppen des aus dem Formhohlraum austretenden Giessmaterials, vorgesehen werden müssen.

Da die Giesskammer 6 zusammen mit dem Formhohlraum 4 vor dem vollständigen Zusammenfahren der beiden Formhälften 3a, 3b evakuiert wurde, befindet sich auch nach dem Schliessen des Entlüftungskanals 13, je nach Höhe des vorgängig erzeugten Vakuums, nur noch eine relativ geringe Menge Gas in den genannten Hohlräumen. Dadurch können Lufteinschlüsse im fertigen Giessteil auch dann zuverlässig vermieden werden, wenn der Entlüftungskanal 13 schon vor dem Füllen des Formhohlraums 4 verschlossen wird.

Indem sowohl die Giesskammer 6 wie auch der Formhohlraum 4 entlüftet werden, kann sichergestellt werden, dass nicht nur die in der Giessform 3 eingeschlossenen Gase -Luft- sondern auch die aus der flüssigen Giessmasse austretenden Gase entweichen können. Damit wird ein erheblicher Beitrag sowohl für eine qualitativ gutes Produkt wie auch für einen hohen Durchsatz durch Verkürzung der Zykluszeit erreicht.

Als Vakuumanlage 16 kann beispielsweise eine herkömmliche Pumpe oder eine Venturipumpe vorgesehen werden. In jedem Fall kann die Vakuumanlage 16 einen Vakuumtank umfassen, der ein schnelles Evakuieren des Formhohlraums 4 sowie der Giesskammer 6 begünstigt.

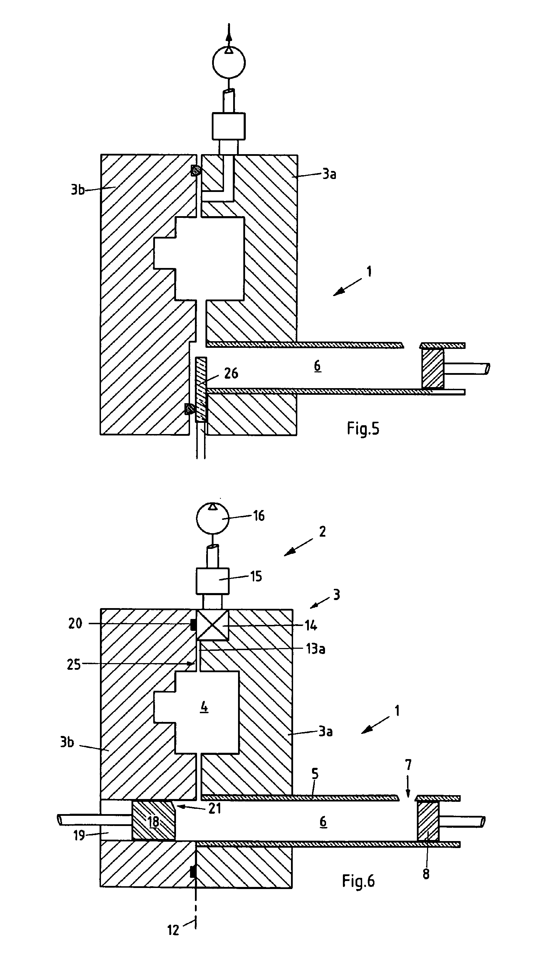

Die Fig. 5 zeigt einen Querschnitt durch ein zweites Ausführungsbeispiel der Erfindung, namentlich eine Giessvorrichtung 1 zusammen mit einer Entlüftungseinrichtung 2. Der hauptsächliche Unterschied zu dem vorgängig gezeigten Ausführungsbeispiel besteht darin, dass anstelle eines an der beweglichen Formhälfte 3b angeordneten Verschlusskolbens ein an der festen Formhälfte 3a angeordneter Schieber 26 zum Verschliessen der Giesskammer 6 vorgesehen ist.

Die Fig. 6 zeigt einen Querschnitt durch ein drittes Ausführungsbeispiel der Erfindung. Bei diesem Beispiel mündet der Entlüftungskanal 13a nicht in die Stirnseite der festen Formhälfte 3a, sondern es ist ein mit dem Formhohlraum 4 verbundener Entlüftungskanal 13a vorgesehen, der zumindest teilweise in die Trennfläche 12 eingelassen ist und vertikal nach oben führt. Der in die Trennfläche 12 eingelassene Teil des Entlüftungskanals 13a verläuft innerhalb des Dichtorgans 20, so dass das Dichtorgan 20 neben dem Formhohlraum 4 auch den in die Trennfläche 12 eingelassen Teil des Entlüftungskanals 13a umschliesst, sobald das Dichtorgan 20 an der festen Formhälfte 3a zur Anlage kommt.

Der vorzugsweise nur einen kleinen Querschnitt besitzende Entlüftungskanal 13a soll ermöglichen, dass auch nach dem vollständigen Schliessen der beiden Formhälften 3a, 3b weiter Gase abgesaugt werden können. Um jedoch zu verhindern, dass über den Entlüftungskanal 13a Giessmaterial aus der Giessform 3 austreten kann, mündet der Entlüftungskanal 13a in ein Entlüftungsventil 14. Als Entlüftungsventil 14 kommt sowohl ein fremdbetätigtes Ventil, welches beispielsweise zeitgesteuert ist, wie auch ein durch das Giessmaterial betätigtes Ventil in Frage. Anstelle des Entlüftungsventils 14 kann auch ein sogenannter Kühlblock o.ä. vorgesehen werden. Der Auslass des Entlüftungsventils 14 ist wiederum mit einer Vakuumanlage 16 verbunden, welche dem zwangsweisen Entlüften des Formhohlraums 4 sowie der Giesskammer 6 dient. Zwischen das Entlüftungsventil 14 und die Vakuumanlage 16 ist ein Filter 15 geschaltet. Nach dem Schliessen der beiden Formhälften 3a, 3b wird der Entlüftungskanal 13a einseitig durch die bewegliche Formhälfte 3b begrenzt.

Mit dieser Vorrichtung ist ein zweistufiges Evakuier-Verfahren möglich, bei dem die Gase in der ersten Stufe, namentlich vor dem vollständigen Schliessen der Form 3, über den zwischen den beiden Formhälften 3a, 3b verbleibenden Spalt abgesaugt werden, während in der zweiten Stufe, bei geschlossener Form 3, nur noch über den kleinen Querschnitt des Entlüftungskanals 13a abgesaugt wird. Der Querschnitt des Entlüftungskanals 13a ist vorzugsweise so gewählt, dass pro Zeiteinheit nur eine vergleichsweise geringe Menge an Giessmaterial eindringen kann.

Die gezeigten Giessvorrichtungen 1 eignen sich grundsätzlich sowohl für Druck- wie auch Spritzgussverfahren. Im Falle von Metallguss können dies sowohl Kaltkammerdruckgiessverfahren wie auch Warmkammerdruckgiessverfahren sein. Aber auch bei Kunststoff-Spritzgiessverfahren kann die erfindungsgemässe Giessvorrichtung 1 grundsätzlich zum Einsatz kommen, wobei dann anstelle der Giesskammer ein Plastifizierzylinder oder dergleichen vorgesehen ist. Der Ausdruck Giesskammer ist deshalb nicht ausschliesslich auf herkömmliche Giesskammem beschränkt, sondern umfasst jegliche Arten von Kammern, Zylindern oder dergleichen, die dem Aufbereiten oder der Aufnahme des Giessmaterials dienen.

## Patentansprüche

1. Giessvorrichtung (1) mit einer aus zwei Formhälften (3a, 3b) bestehenden einen Formhohlraum (4) aufweisenden Giessform (3) sowie einer mit dem Formhohlraum (4) verbundenen Giesskammer (6), wobei zumindest die eine Formhälfte (3a) mit einem Entlüftungskanal (13, 13a) zum Entlüften des Formhohlraums (4) und/oder der Giesskammer (6) versehen ist und an der einen Formhälfte (3b) ein Dichtorgan (20) angeordnet ist, welches beim Zusammenführen der beiden Formhälften (3a, 3b) dichtend an der anderen Formhälfte (3a) zur Anlage kommt, **dadurch gekennzeichnet, dass** der Auslass (9) der Giesskammer (6) mittels eines Verschlussorgans (18, 26) zumindest teilweise verschliessbar ist und dass der Entlüftungskanal (13) entweder radial innerhalb des Dichtorgans derart in die Trennfläche (12) der einen Formhälfte (3a) mündet, dass er beim Schliessen der Giessform (3) durch die andere Formhälfte (3b) verschliessbar ist, oder dass der Entlüftungskanal (13a) zumindest teilweise in die Trennfläche (12) eingelassen ist und zumindest der in die Trennfläche (12) eingelassene Teil des Entlüftungskanals (13a) radial innerhalb des Dichtorgans (20) verläuft.

2. Giessvorrichtung (1) nach Anspruch 1, **dadurch gekennzeichnet, dass** die eine Formhälfte (3a) ortsfest angeordnet ist, während die andere Formhälfte (3b) derart zwischen einer ersten und zweiten Position verschiebbar angeordnet ist, dass in der ersten Position das an der einen Formhälfte (3b) angeordnete Dichtorgan (20) dichtend an der anderen Formhälfte (3a) zur Anlage kommt, wobei in dieser ersten Position ein Spalt (21) wischen den beiden Formhälften (3a, 3b) verbleibt, über welchen Gase aus dem Formhohlraum (4) und/oder der Giesskammer (6) absaugbar sind, während in der zweiten Position der Spalt zwischen den beiden Formhälften (3a, 3b) aufgehoben ist.

3. Giessvorrichtung (1) nach Anspruch 1 oder 2, **dadurch gekennzeichnet, dass** der Entlüftungskanal (13) unter einem Winkel von 30 bis 90° in die Trennfläche (12) der einen Formhälfte (3a) mündet und an der einen Formhälfte (3b) ein den Formhohlraum (4) sowie die Mündung des Entlüftungskanals (13) umgebendes Dichtorgan (20) angeordnet ist, welches beim Zusammenführen der beiden Formhälften (3a, 3b) dichtend an der anderen Formhälfte (3a) zur Anlage kommt.

4. Giessvorrichtung (1) nach Anspruch 1 oder 2, **dadurch gekennzeichnet, dass** der Entlüftungskanal (13a) zumindest teilweise in die Trennfläche eingelassen ist und an der einen Formhälfte (3b) ein den Formhohlraum (4) sowie zumindest den in der Trennfläche (12) verlaufenden Teil des Entlüftungskanals (13a) umgebendes Dichtorgan (20) angeordnet ist, welches beim Zusammenführen der beiden Formhälften (3a, 3b) dichtend an der anderen Formhälfte (3a) zur Anlage kommt.

5. Giessvorrichtung (1) nach einem der vorhergehenden Ansprüche, **dadurch gekennzeichnet, dass** die Giessvorrichtung (1) eine Entlüftungseinrichtung (2) zum Entlüften des Formhohlraums (4) und/oder der Giesskammer (6) sowie Mittel (16) zum Erzeugen eines Unterdrucks im Entlüftungskanal (13) umfasst.

6. Giessvorrichtung (1) nach Anspruch 5, **dadurch gekennzeichnet, dass** die Mittel (16) zum Erzeugen eines Unterdrucks im Entlüftungskanal (13) eine Pumpe und/oder einen Vakuumtank umfassen.

7. Giessvorrichtung (1) nach einem der vorhergehenden Ansprüche, **dadurch gekennzeichnet, dass** die Giesskammer (6) an der einen Formhälfte (3a) angeordnet ist und der Auslass (9) der Giesskammer (6) mittels eines an der gleichen Formhälfte (3a) angeordneten Verschlussorgans zumindest teilweise verschliessbar ist.

8. Giessvorrichtung (1) nach einem der Ansprüche 1 bis 6, **dadurch gekennzeichnet, dass** als Verschlussorgan ein quer zur Längsachse der Giesskammer (6) bewegbarer Schieber (26) oder ein axial zur Längsachse der Giesskammer (6) bewegbarer Verschlusskolben (18) vorgesehen ist.

9. Giessvorrichtung (1) nach einem der vorhergehenden Ansprüche, **dadurch gekennzeichnet, dass** der Entlüftungskanal (13, 13a) derart in die eine Formhälfte (3a) eingelassen ist, dass bei nur teilweise verschlossener Giesskammer (6) sowohl der Formhohlraum (4) als auch die Giesskammer (6) zwangsweise evakuierbar sind.

10. Verfahren zum Entlüften von Giessvorrichtungen (1), welche letztere mit einer einen Formhohlraum (4) aufweisenden Giessform (3) sowie einer mit dem Formhohlraum (4) verbundenen Giesskammer (6) versehen sind, deren Auslass (9) mittels eines Verschlussorgans (18, 26) zumindest teilweise verschliessbar ist, und der Auslass (9) der Giesskammer (6) mittels des Verschlussorgans (18, 26) zumindest teilweise verschlossen wird, und dass während des Füllens der Giesskammer (6) mit Giessmaterial (23) der Formhohlraum (4) und/oder die Giesskammer (6) evakuiert wird/werden.

11. Verfahren nach Anspruch 10, wobei an der einen Formhälfte (3b) der Giessvorrichtung (1) ein den Formhohlraum (4) sowie den Entlüftungskanal (13, 13a) radial umgebendes Dichtorgan (20) angeordnet ist, welches beim Zusammenführen der beiden Formhälften (3a, 3b) dichtend an der anderen Formhälfte (3a) zur Anlage kommt, **dadurch gekennzeichnet, dass** die beiden Formhälften (3a, 3b) soweit zusammengefahren werden, bis das an der einen Formhälfte (3b) angeordnete Dichtorgan (20) dichtend an der anderen Formhälfte (3a) zur Anlage kommt, und dass danach über den zwischen den beiden Formhälften verbleibenden Spalt Gase aus dem Formhohlraum (4) und/oder der Giesskammer (6) abgesaugt werden.

12. Verfahren nach Anspruch 11, **dadurch gekennzeichnet, dass** vor dem Einleiten von Giessmaterial in den Formhohlraum (4) über den genannten Spalt (21) Gase aus dem Formhohlraum (4) und/oder der Giesskammer (6) abgesaugt werden.

## Claims

1. A casting device (1) with a mold (3) comprising a mold cavity (4) consisting of two mold halves (3a, 3b) as well as a casting chamber (6) connected to the mold cavity (4), wherein at least the one mold half (3a) is provided with an evacuation duct (13, 13a) for evacuating the mold cavity (4) and/or the casting chamber (6) and a sealing member (20) is arranged at the one mold half (3b), the sealing member (20) sealingly coming into contact at the other mold half (3a) on jointing together the two mold halves (3a,3b), **characterized in that** the outlet (9) of the casting chamber (6) is closable off at least partly by means of a closure member (18, 26) and that the evacuation duct (13) either merges radially within the sealing member (20) in the parting face (12) of the one mold half (3a) such that on closure of the mold (3) it is closable by the other mold half (3b), or that the evacuation duct (13a) is machined at least partly in the parting face (12) and at least the part of the evacuation duct (13a) machined in the parting face (12) runs radially within the sealing member (20).

2. The casting device (1) as set forth in claim 1, **characterized in that** said one mold half (3a) is arranged stationary whilst the other mold half (3b) is arranged shiftable between a first and second position such that in the first position the sealing member (20) arranged at the one mold half (3b) sealingly comes into contact at the other mold half (3a), whereby in the first position a gap (21) remains between the two mold halves (3a, 3b) via which gases are exhaustable from the mold cavity (4) and/or the casting chamber (6), whilst in the second position the gap between the two mold halves (3a, 3b) is eliminated.

3. The casting device (1) as set forth in claim 1 or 2, **characterized in that** said evacuation duct (13) merges at an angle of 30° to 90° in the parting face (12) of the one mold half (3a) and at the one mold half (3b) a sealing member (20) surrounding the mold cavity (4) as well as the mouth of the evacuation duct (13) is arranged, said sealing member (20) sealingly coming into contact at the other mold half (3a) on bringing the two mold halves (3a, 3b) together.

4. The casting device (1) as set forth in claim 1 or 2, **characterized in that** said evacuation duct (13a) is machined at least partly in the parting face and at the one mold half (3b) a sealing member (20) surrounding at least part of the evacuation duct (13a) running in the parting face (12) is arranged, said sealing member (20) on joining of the two mold halves (3a, 3b) sealingly coming into contact at the other mold half (3a).

5. The casting device (1) as set forth in any of the preceding claims, **characterized in that** said casting device (1) comprises an evacuating means (2) for evacuating the mold cavity (4) and/or the casting chamber (6) as well as means (16) for generating a vacuum in the evacuation duct (13).

6. The casting device (1) as set forth in claim 5, **characterized in that** said means (16) for generating a vacuum in the evacuation duct (13) comprises a pump and/or a vacuum tank.

7. The casting device (1) as set forth in any of the preceding claims, **characterized in that** said casting chamber (6) is arranged at the one mold half (3a) and the outlet (9) of the casting chamber (6) is closable off at least partly by means of a closure member arranged at the same mold half (3a).

8. The casting device (1) as set forth in any of the claims 1 to 6, **characterized in that** provided as the closure member is a spool valve (26) movable transversely to the longitudinal centerline of the casting chamber (6) or a closure piston (18) movable axially to the longitudinal centerline of the casting chamber (6).

9. The casting device (1) as set forth in any of the preceding claims, **characterized in that** said evacuation duct (13, 13a) is machined in the one mold half (3a) such that when the casting chamber (6) is closed off only partly both the mold cavity (4) as well as the casting chamber (6) are automatically evacuatable.

10. A method for evacuating casting devices (1) the latter being provided with a mold (3) comprising a mold cavity (4) as well as a casting chamber (6) connected to the mold cavity (4), the outlet (9) of the casting chamber (6) being closable off by means of a closure member (18, 26) at least partly and in that during filling the casting chamber (6) with casting material (23) the mold cavity (4) and/or the casting chamber (6) is/are evacuated.

11. The method as set forth in claim 10 wherein arrranged at the one mold half (3b) of the casting device (1) is a sealing member (20) radially surrounding the mold cavity (4) as well as the evacuation duct (13, 13a), said sealing member (20) sealingly coming into contact at the other mold half (3a) on bringing the two mold halves (3a, 3b) together, **characterized in that** the two mold halves (3a, 3b) are brought sufficiently together that the sealing member (20) arranged at the one mold half (3b) comes sealingly into contact at the other mold half (3a) and that thereafter via the gap remaining between the two mold halves (3a, 3b) any gas is exhausted from the mold cavity (4) and/or from the casting chamber (6).

12. The method as set forth in claim 11, **characterized in that** prior to introducing casting material into the mold cavity (4) any gas is exhausted from the mold cavity (4) and/or from the casting chamber (6) via the cited gap (21).

## Revendications

1. Dispositif de coulée (1) avec un moule de coulée (3) présentant un espace creux de moule (4), se composant de deux moitiés de moule (3a, 3b) ainsi qu'une chambre de coulée (6) reliée à l'espace creux de moule (4), au moins l'une moitié de moule (3a) étant pourvue d'un canal de ventilation (13, 13a) pour la ventilation de l'espace creux de moule (4) et/ou de la chambre de coulée (6) et un organe étanche (20) étant agencé sur l'une moitié de moule (3b), lequel organe étanche (4) vient en appui de manière étanche lors de la réunion des deux moitiés de moule (3a, 3b) contre l'autre moitié de moule (3a), **caractérisé en ce que** la sortie (9) de la chambre de coulée (6) peut être fermée au moins en partie à l'aide d'un organe de fermeture (18, 26) et **en ce que** le canal de ventilation (13) débouche radialement dans l'organe étanche dans la surface de séparation (12) d'une moitié de moule (3a) de telle manière qu'il puisse être fermé lors de la fermeture du moule de coulée (3) par l'autre moitié de moule (3b) ou **en ce que** le canal de ventilation (13a) est introduit au moins en partie dans la surface de séparation (12) et au moins la partie introduite dans la surface de séparation (12) du canal de ventilation (13a) s'étend radialement dans l'organe étanche (20).

2. Dispositif de coulée (1) selon la revendication 1, **caractérisé en ce qu'**une moitié de moule (3a) est agencée fixement alors que l'autre moitié de moule (3b) est agencée de manière mobile entre une première et une seconde position de telle manière que, dans la première position, l'organe étanche (20) agencé sur l'une moitié de moule (3b) vienne en appui de manière étanche contre l'autre moitié de moule (3a), dans cette première position, une fente (21) restant entre les deux moitiés de moule (3a, 3b), par laquelle des gaz peuvent être aspirés hors de l'espace creux de moule (4) et/ou de la chambre de coulée (6) alors que dans la seconde position, la fente est supprimée entre les deux moitiés de moule (3a, 3b).

3. Dispositif de coulée (1) selon la revendication 1 ou 2, **caractérisé en ce que** le canal de ventilation (13) débouche selon un angle de 30 à 90° dans la surface de séparation (12) d'une moitié de moule (3a) et un organe étanche (20) entourant l'espace creux de moule (4) ainsi que l'embouchure du canal de ventilation (13) est agencé sur l'une moitié de moule (3b), lequel organe étanche (20) vient en appui de manière étanche lors de la réunion des deux moitiés de moule (3a, 3b) contre l'autre moitié de moule (3a).

4. Dispositif de coulée (1) selon la revendication 1 ou 2, **caractérisé en ce que** le canal de ventilation (13a) est introduit au moins en partie dans la surface de séparation et un organe étanche (20) entourant l'espace creux de moule (4) ainsi qu'au moins la partie s'étendant dans la surface de séparation (12) du canal de ventilation (13a) est agencé sur l'une moitié de moule (3b), lequel organe étanche vient en appui de manière étanche lors de la réunion des deux moitiés de moule (3a, 3b) contre l'autre moitié de moule (3a).

5. Dispositif de coulée (1) selon l'une quelconque des revendications précédentes, **caractérisé en ce que** le dispositif de coulée (1) comporte un dispositif de ventilation (2) pour la ventilation de l'espace creux de moule (4) et/ou de la chambre de coulée (6) ainsi que des moyens (16) pour la génération d'une dépression dans le canal de ventilation (13).

6. Dispositif de coulée (1) selon la revendication 5, **caractérisé en ce que** les moyens (16) pour la génération d'une dépression dans le canal de ventilation (13) comportent une pompe et/ou un réservoir de vide.

7. Dispositif de coulée (1) selon l'une quelconque des revendications précédentes, **caractérisé en ce que** la chambre de coulée (6) est agencée sur l'une moitié de moule (3a) et la sortie (9) de la chambre de coulée (6) peut être fermée au moins en partie à l'aide d'un organe de fermeture agencé sur la même moitié de moule (3a).

8. Dispositif de coulée (1) selon l'une quelconque des revendications 1 à 6, **caractérisé en ce qu'**un coulisseau (26) mobile transversalement par rapport à l'axe longitudinal de la chambre de coulée (6) ou un piston de fermeture (18) mobile axialement par rapport à l'axe longitudinal de la chambre de coulée (6) est prévu comme organe de fermeture.

9. Dispositif de coulée (1) selon l'une quelconque des revendications précédentes, **caractérisé en ce que** le canal de ventilation (13, 13a) est introduit dans l'une moitié de moule (3a) de telle manière que lorsque la chambre de coulée (6) est fermée seulement en partie, non seulement l'espace creux de moule (4) mais aussi la chambre de coulée (6) peuvent être évacués à force.

10. Procédé de ventilation de dispositifs de coulée (1) ; ces derniers sont pourvus d'un moule de coulée (3) présentant un espace creux de moule (4) ainsi qu'une chambre de coulée (6) reliée à l'espace creux de moule (4) dont la sortie (9) peut être fermée au moins en partie à l'aide d'un organe de fermeture (18, 26) et la sortie (9) de la chambre de coulée (6) est fermée au moins en partie à l'aide de l'organe de fermeture (18, 26) et, pendant le remplissage de la chambre de coulée (6) en matériau de coulée (23), l'espace creux de moule (4) et/ou la chambre de coulée (6) est/sont évacué(s).

11. Procédé selon la revendication 10, un organe étanche (20) entourant radialement l'espace creux de moule (4) ainsi que le canal de ventilation (13, 13a) étant agencé sur l'une moitié de moule (3b) du dispositif de coulée (1), lequel organe étanche vient en appui de manière étanche lors de la réunion des deux moitiés de moule (3a, 3b) contre l'autre moitié de moule (3a), **caractérisé en ce que** les deux moitiés de moule (3a, 3b) sont déplacées ensemble jusqu'à ce que l'organe étanche (20) agencé sur l'une moitié de moule (3b) vienne en appui de manière étanche contre l'autre moitié de moule (3a), et **en ce qu'**après, des gaz sont aspirés hors de l'espace creux de moule (4) et/ou de la chambre de coulée (6) par la fente restant entre les deux moitiés de moule.

12. Procédé selon la revendication 11, **caractérisé en ce que** des gaz sont aspirés hors de l'espace creux de moule (4) et/ou de la chambre de coulée (6) avant l'introduction de matériau de coulée dans l'espace creux de moule (4) par la fente citée (21).
